# EUROPÄISCHE PATENTSCHRIFT

(11) **EP 1 579 124 B1**
(45) Veröffentlichungstag und Bekanntmachung des Hinweises auf die Patenterteilung: **17.10.2018**
(21) Anmeldenummer: 03789204.9
(22) Anmeldetag: 10.12.2003
(51) Int. Cl.: F16D 65/14, F16D 51/50, F16D 65/22, F16D 121/24, F16D 125/40, F16D 125/48, F16D 125/52

(54) **ELEKTROMECHANISCH BETÄTIGBARE FESTSTELLBREMSE**
ELECTROMECHANICALLY-OPERATED PARKING BRAKE
FREIN DE STATIONNEMENT COMMANDE LECTROM CANIQUE

(30) Priorität: 20.12.2002 DE 10261095; 17.09.2003 DE 10343246
(43) Veröffentlichungstag der Anmeldung: 28.09.2005
(73) Patentinhaber: Continental Teves AG & Co. OHG, 60488 Frankfurt am Main (DE)
(72) Erfinder: BALZ, Jürgen, 65510 Hünstetten-Oberlibbach (DE); WEILER, Rolf, 65817 Eppstein (DE); SCHMITT, Stefan, Johannes, 65343 Eltville (DE); KAISER, Andreas, 22089 Hamburg (DE); SALZMANN, Sebastian, 63477 Maintal (DE)
(86) Internationale Anmeldenummer: PCT/EP2003/013997
(87) Internationale Veröffentlichungsnummer: WO 2004/059189

(56) Entgegenhaltungen:
- WO-A-01/42677
- WO-A-03/048599
- US-A- 3 809 191
- US-A- 4 793 447
- US-A- 4 928 543
- US-B1- 6 209 689

## Beschreibung

Die vorliegende Erfindung betrifft eine elektromechanisch betätigbare Feststellbremse für Kraftfahrzeuge, mit den Merkmalen vom oberbegriff von Patentanspruch 1. Eine derartige Feststellbremse ist aus US 4928543A bekannt.

Aus der deutschen Offenlegungsschrift DE 198 46 420 A1 ist eine Trommelbremse bekannt, die während Betriebsbremsungen die Funktion einer Trommelbremse vom Typ "Simplex" erfüllt und während Feststellbremsvorgängen die Funktion einer Trommelbremse vom Typ "Duo-Servo" erfüllt. Dazu ist bei der vorbekannten Trommelbremse eine elektromechanisch betätigbare Vorrichtung vorgesehen, die die Wirkung der Abstützvorrichtung der beiden Bremsbacken aufhebt und eine schwimmende Lagerung realisiert. Durch diese Maßnahme werden gleichzeitig die Bremsbacken mit der Bremstrommel zur Durchführung eines Feststellbremsvorganges in Eingriff gebracht. Als weniger vorteilhaft ist bei der vorbekannten Trommelbremse anzusehen, dass die Bremsbacken während eines Feststellbremsvorganges nur um eine einzige vorbestimmte Wegstrecke verstellbar sind, die insbesondere bei verschlissenen Bremsbelägen nicht ausreichend ist, um die erforderliche Zuspannkraft zu erreichen.

Es ist daher Aufgabe der Erfindung, eine elektromechanisch betätigbare Feststellbremse der eingangs genannten Gattung dahingehend zu verbessern, dass die Zuspannkraft während eines stromlosen Feststellbremsvorgangs zuverlässig verfügbar ist.

Diese Aufgabe wird erfindungsgemäß durch die kennzeichnechen Merkmale von Anspruch 1 gelöst.

Eine vorteilhafte Weiterbildung des Erfindungsgegenstandes sieht vor, dass die Gewindemutter eine Geradverzahnung aufweist, die mit einem vom elektromechanischen Aktuator angetriebenen Schraubrad ein Schraubradgetriebe bildet.

Bei einer weiteren vorteilhaften Weiterbildung des Erfindungsgegenstandes weist die Gewindemutter eine Geradverzahnung auf, die mit einem vom elektromechanischen Aktuator angetriebenen Zahnrad ein Stirnradgetriebe bildet.

Es ist vorgesehen, dass der elektromechanische Aktuator radial zur Bremstrommel unter einem dem vorhandenen Bauraum angepassten Winkel relativ zu einer Ebene, die senkrecht zur Achse der Bremstrommel steht, angebracht ist.

Bei einer vorteilhaften Weiterbildung ist der elektromechanische Aktuator tangential zur Bremstrommel angebracht.

Außerdem ist zwischen dem elektromechanischen Aktuator und dem Schraubrad bzw. dem Zahnrad ein Untersetzungsgetriebe vorgesehen.

Eine besonders vorteilhafte Weiterbildung des Erfindungsgegenstandes sieht vor, dass der elektromechanische Aktuator durch einen Elektromotor gebildet ist, der einen Sensor zur Erfassung der Position seines Rotors aufweist. Durch diese Maßnahme ist der Belagverschleiß der Bremsbacken ermittelbar.

Bei einer weiteren vorteilhaften Ausführung des Erfindungsgegenstandes ist die Bremstrommel im mittleren Bereich einer Bremsscheibe angeordnet.

Die Erfindung wird nachfolgend anhand von zwei Ausführungsbeispielen im Zusammenhang mit der beiliegenden Zeichnung näher erläutert. In der Zeichnung zeigen:
- Fig.1: eine vereinfachte Darstellung einer ersten Ausführung der erfindungsgemäßen Feststellbremse,
- Fig.2: eine Schnittdarstellung eines Spreizschlosses, das in der in Fig.1 dargestellten Feststellbremse einsetzbar ist,
- Fig.3a, b: eine zweite Ausführung der erfindungsgemäßen Feststellbremse in einer schematischen perspektivischen Darstellung in Rück- und in Vorderansicht und
- Fig.4: eine Schnittdarstellung eines Spreizschloss, das in der in Fig.3 dargestellten Feststellbremse einsetzbar ist.

Die in der Zeichnung dargestellte erfindungsgemäße elektromechanisch betätigbare Feststellbremse besteht im wesentlichen aus einer an sich bekannten Trommelbremse vom Typ "Duo-Servo", sowie einem elektromechanischen Aktuator 15. Die Trommelbremse vom Typ "Duo-Servo" weist eine Bremstrommel 5, ein mit Reibflächen versehenes Paar von Bremsbacken 3, 4 und ein Spreizschloss 2 auf, das die Reibflächen der Bremsbacken 3, 4 mit der Innenseite der Bremstrommel 5 in Eingriff bringen kann. Charakteristisch für die Trommelbremse vom Typ "Duo-Servo" ist eine frei bewegliche bzw. schwimmend gelagerte Abstützvorrichtung 14, die dem Spreizschloss 2 gegenüber liegt und zwischen den Bremsbakken 3, 4 angeordnet ist. Außerdem ist die Abstützvorrichtung 14 mit einer Nachstellvorrichtung kombiniert.

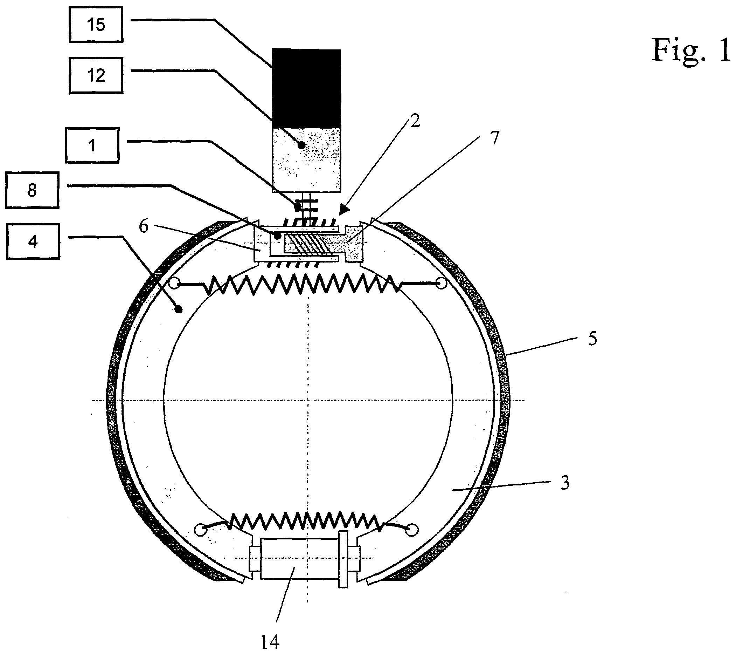

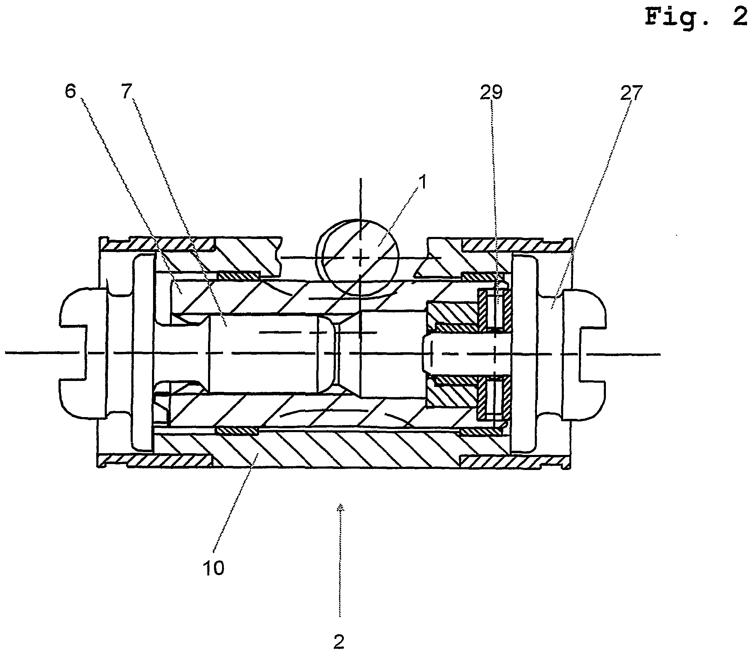

Bei der in Fig.1 dargestellten ersten Ausführung ist der elektromechanische Aktuator 15 radial zur Bremstrommel 5 an einem nicht dargestellten Radträger vorzugsweise unter einem Winkel von etwa 30° gegenüber der dargestellten Schnittebene angebracht, was hinsichtlich der beschränkten Bauraumverhältnisse am Rad besonders vorteilhaft ist. Der elektromechanische Aktuator 15 treibt über ein nicht näher beschriebenes Untersetzungsgetriebe 12 ein Schraubrad 1 an, wodurch das bereits erwähnte Spreizschloss 2, das anhand von Fig.2 noch näher erläutert wird, betätigt wird. Dabei ist das Spreizschloss 2 als Gewindemutter-Spindel-Anordnung 8 ausgebildet, deren Gewindemutter 6 auf der äußeren Oberfläche eine Verzahnung aufweist, die parallel zur Achse der Gewindemutter 6 verläuft. Mit dieser Geradverzahnung der Gewindemutter 6 bildet das eben erwähnte Schraubrad 1 ein Schraubradgetriebe. Bei einer Betätigung des Schraubrads 1 durch den elektromechanischen Aktuator 15 wird die Gewindemutter 6 in eine Rotationsbewegung versetzt. Aufgrund dieser Rotationsbewegung der Gewindemutter 6 vollzieht die Spindel 7 der Gewindemutter-Spindel-Anordnung 8 eine Translationsbewegung und bringt die beiden Bremsbacken 3, 4 mit der gewünschten Zuspannkraft auch bei verschlissenen Bremsbelägen mit der Bremstrommel 5 in Eingriff.

Um einen Feststellbremsvorgang durchführen zu können, ist entweder das Untersetzungsgetriebe 12 oder die Gewindemutter-Spindel-Anordnung 8 selbsthemmend ausgebildet. Durch diese Maßnahme verbleiben die Bremsbacken 3, 4 im stromlosen Zustand des elektromechanischen Aktuators 15 mit der Bremstrommel 5 in Eingriff.

Der bereits erwähnte elektromechanische Aktuator 15 wird durch einen Elektromotor gebildet und weist einen nicht dargestellten Sensor auf, der die Position seines Rotors erfasst. Dadurch ist ermittelbar, wie viele Umdrehungen der Rotor und damit sowohl das Schraubrad 1 als auch die Gewindemutter 6 vollziehen. Mit Hilfe dieser Informationen ist eine sehr zuverlässig arbeitende Belagverschleißerkennung der Bremsbacken 3, 4 realisierbar.

Das Spreizschloss 2 wird im Folgenden anhand von Fig.2 näher erläutert. Wie bereits erwähnt, wird das Spreizschloss 2 durch eine Gewindemutter-Spindel-Anordnung 8 gebildet, deren Gewindemutter 6 in einem Gehäuse 10 des Spreizschlosses 2 mit Hilfe eines Axiallagers 29 drehbar gelagert ist. Die Geradverzahnung auf der äußeren Oberfläche der Gewindemutter 6 ist lediglich schematisch angedeutet und das mit ihr in Eingriff stehende Schraubrad 1 lediglich im Schnitt dargestellt. Sobald der elektromechanische Aktuator das Schraubrad 1 antreibt, wird die Gewindemutter 6, wie bereits beschrieben, in Rotation versetzt. Dadurch vollzieht die Spindel 7 eine Translationsbewegung in der Zeichnung nach links und drückt die erste Bremsbacke 3 gegen die Bremstrommel 5. Die so erzielte Zuspannkraft stützt sich über das Axiallager 29 auf einem Druckstück 27 ab. Als Gegenreaktion wird auch die zweite Bremsbacke 4 gegen die Bremstrommel gedrückt und das Spreizschloss 2 zentriert sich selbst innerhalb der Bremstrommel 5. Um den eben beschriebenen Vorgang zu ermöglichen, muss das Spreizschloss 2 bzw. die Gewindemutter-Spindel-Anordnung 8 frei beweglich, also schwimmend gelagert, sein. Aus diesem Grund bildet die Achse des elektromechanischen Aktuators 15 bzw. des Schraubrades 1 mit der Achse der geradverzahnten Gewindemutter 6 keinen rechten Winkel, sondern ist entsprechend der Steigung des Schraubrads 1 winkelverdreht. Dieser Winkelversatz ergibt die Möglichkeit, dass der gesamte Innenbereich des Spreizschlosses 2 im Gehäuse 10 axial verschiebbar ist. Dadurch werden die Spiele innerhalb der Bremstrommel 5 ausgeglichen.

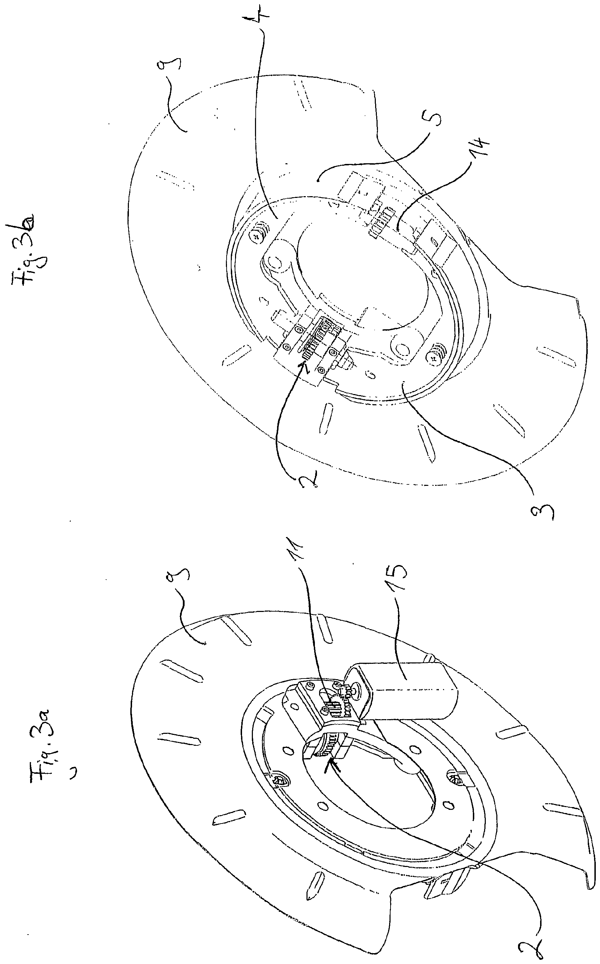

Bei der in Fig.3a und Fig.3b dargestellten zweiten Ausführung der erfindungsgemäßen Feststellbremse ist der elektromechanische Aktuator 15 tangential zur Bremstrommel 5 an einem Schmutzblech 9 angebracht, das wiederum fest mit dem nicht dargestellten Radträger verbunden ist. Diese Anordnung des elektromechanischen Aktuators 15 ist ebenfalls vorteilhaft hinsichtlich der beschränkten Bauraumverhältnisse am Rad.

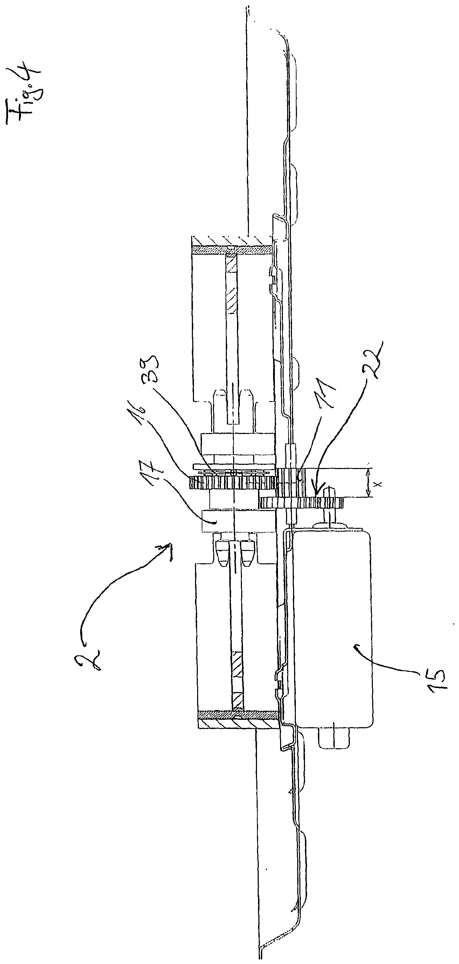

Der elektromechanische Aktuator 15 treibt über ein Untersetzungsgetriebe 22 ein Zahnrad 11 an, wodurch das Spreizschloss 2 betätigt wird und die beiden Bremsbacken 3, 4 mit der Innenseite der Bremstrommel 5 in Eingriff gebracht werden. Das Spreizschloss 2 wird wiederum aus einer Gewindemutter-Spindel-Anordnung 18 gebildet, wie es insbesondere in Fig.4 dargestellt ist. Die Gewindemutter 16 weist auf ihrer äußeren Oberfläche eine Geradverzahnung auf und bildet mit dem Zahnrad 11 ein geradverzahntes Stirnradgetriebe. Sobald der elektromechanische Aktuator 15 das Zahnrad 11 über das Untersetzungsgetriebe 22 antreibt, wird die Gewindemutter 16 in Rotation versetzt, wonach die Spindel 17 eine Translationsbewegung vollzieht und die der Spindel 17 zugeordnete Bremsbacke 3 gegen die Bremstrommel 5 drückt. Als Gegenreaktion wird auch die andere Bremsbacke 4 gegen die Bremstrommel 5 gedrückt und das Spreizschloss 2 zentriert sich selbst. Die für diesen Vorgang notwendige schwimmende Lagerung des Spreizschlosses 2 wird dadurch realisiert, dass das Zahnrad 11 mit der Gewindemutter 16 ein geradverzahntes Stirnradgetriebe bildet und das Zahnrad 11 breiter als die Geradverzahnung am Außenumfang der Gewindemutter 16 ausgeführt ist. Dadurch ist die Gewindemutter-Spindel-Anordnung 18 horizontal frei beweglich, wie es insbesondere Fig.4 verdeutlicht.

Um einen Feststellbremsvorgang durchführen zu können muss wie bei der anhand von Fig.1 und Fig.2 beschriebenen ersten Ausführung der erfinderischen Feststellbremse das Untersetzungsgetriebe 22 oder die Gewindemutter-Spindel-Anordnung 18 selbsthemmend ausgeführt sein, damit die eingestellte Zuspannkraft nach Abschalten des elektromechanischen Aktuators 15 erhalten bleibt.

Bei beiden beschriebenen Ausführungsbeispielen der erfindungsgemäßen Feststellbremse kann der elektromechanische Aktuator 15 mit den Bremsbacken 3, 4, der Abstützvorrichtung 14 und dem Schmutzblech 9 ein vormontierte Baugruppe bilden, die bei der Herstellung von Kraftfahrzeugen besonders einfach montiert werden kann.

Außerdem können beide beschriebene Ausführungsbeispiele der erfindungsgemäßen Feststellbremse mit einer hydraulischen Scheibenbremse für Betriebsbremsungen kombiniert werden, indem die Bremstrommel 5 im mittleren Bereich einer Bremsscheibe angeordnet. Dies hat den Vorteil, dass die erfindungsgemäße Feststellbremse mit einer besonders kostengünstigen Ansteuerung des elektromechanischen Aktuators 15 betrieben und die Leistungsanforderung an den elektromechanischen Aktuator 15 minimiert werden kann.

## Patentansprüche

1. Elektromechanisch betätigbare Feststellbremse für Kraftfahrzeuge, die als eine Trommelbremse ausgeführt ist, mit einer Bremstrommel (5) und mit einem von einem elektromechanischen Aktuator (15) mit einem Untersetzungsgetriebe (12,22) betätigbaren, schwimmend gelagerten Spreizschloss, das auf zwei Bremsbacken (3,4) wirkt, wobei das Spreizschloss (2) durch eine Gewindemutter-Spindel-Anordnung (8, 18) gebildet ist, deren Gewindemutter (6, 16) vom elektromechanischen Aktuator (15) angetrieben wird, **dadurch gekennzeichnet, dass** das Untersetzungsgetriebe (12, 22) oder die Gewindemutter-Spindel-Anordnung (8, 18) selbsthemmend ausgebildet ist, um im stromlosen Zustand einen Feststellvorgang zu ermöglichen, dass die Trommelbremse zusätzlich eine schwimmend gelagerte Abstützvorrichtung (14) aufweist, die dem Spreizschloss (2) gegenüber liegend vorgesehen ist, und wobei die Bremstrommel (5) im mittleren Bereich einer Bremsscheibe angeordnet ist.

2. Elektromechanisch betätigbare Feststellbremse nach Anspruch 1, **dadurch gekennzeichnet, dass** die Gewindemutter (6) eine Geradverzahnung aufweist, die mit einem vom elektromechanischen Aktuator (15) angetriebenen Schraubrad (1) ein Schraubradgetriebe bildet.

3. Elektromechanisch betätigbare Feststellbremse nach Anspruch 1, **dadurch gekennzeichnet, dass** die Gewindemutter (16) eine Geradverzahnung aufweist, die mit einem vom elektromechanischen Aktuator (15) angetriebenen Zahnrad (11) ein Stirnradgetriebe bildet.

4. Elektromechanisch betätigbare Feststellbremse nach Anspruch 1 oder 2, **dadurch gekennzeichnet, dass** der elektromechanische Aktuator (15) radial zur Bremstrommel (5) unter einem dem vorhandenen Bauraum angepassten Winkel relativ zu einer Ebene, die senkrecht zur Achse der Bremstrommel (5) steht, angebracht ist.

5. Elektromechanisch betätigbare Feststellbremse nach Anspruch 1 oder 3, **dadurch gekennzeichnet, dass** der elektromechanische Aktuator (15) tangential zur Bremstrommel (5) angebracht ist.

6. Elektromechanisch betätigbare Feststellbremse nach Anspruch 2, **dadurch gekennzeichnet, dass** das Untersetzungsgetriebe (12) zwischen dem elektromechanischen Aktuator (15) und dem Schraubrad (1) vorgesehen ist.

7. Elektromechanisch betätigbare Feststellbremse nach Anspruch 3, **dadurch gekennzeichnet, dass** das Untersetzungsgetriebe (22) zwischen dem elektromechanischen Aktuator (15) und dem Zahnrad (11) vorgesehen ist.

8. Elektromechanisch betätigbare Feststellbremse nach einem der vorhergehenden Ansprüche, **dadurch gekennzeichnet, dass** der elektromechanische Aktuator (15) durch einen Elektromotor gebildet ist, der einen Sensor zur Erfassung der Position seines Rotors aufweist.

## Claims

1. Electromechanically actuable parking brake for motor vehicles, which is designed as a drum brake, comprising a brake drum (5) and comprising an expanding lock which can be actuated by an electromechanical actuator (15) with a step-down gear mechanism (12, 22) and is mounted in a floating manner and acts on two brake shoes (3, 4), wherein the expanding lock (2) is formed by a threaded nut/spindle arrangement (8, 18), the threaded nut (6, 16) of which is driven by the electromechanical actuator (15), **characterized in that** the step-down gear mechanism (12, 22) or the threaded nut/spindle arrangement (8, 18) is designed in a self-locking manner in order to allow a parking brake application process in the deenergized state, **in that** the drum brake additionally has a supporting apparatus (14) which is mounted in a floating manner and which is provided opposite the expanding lock (2), and wherein the brake drum (5) is arranged in the central region of a brake disc.

2. Electromechanically actuable parking brake according to Claim 1, **characterized in that** the threaded nut (6) has a spur toothing which forms a helical gear mechanism with a helical gear (1) which is driven by the electromechanical actuator (15).

3. Electromechanically actuable parking brake according to Claim 1, **characterized in that** the threaded nut (16) has a spur toothing which forms a spur gear mechanism with a gear wheel (11) which is driven by the electromechanical actuator (15).

4. Electromechanically actuable parking brake according to Claim 1 or 2, **characterized in that** the electromechanical actuator (15) is fitted radially in relation to the brake drum (5) at an angle, which is matched to the available installation space, relative to a plane which is perpendicular to the axis of the brake drum (5).

5. Electromechanically actuable parking brake according to Claim 1 or 3, **characterized in that** the electromechanical actuator (15) is fitted tangentially in relation to the brake drum (5).

6. Electromechanically actuable parking brake according to Claim 2, **characterized in that** the step-down gear mechanism (12) is provided between the electromechanical actuator (15) and the helical gear (1) .

7. Electromechanically actuable parking brake according to Claim 3, **characterized in that** the step-down gear mechanism (22) is provided between the electromechanical actuator (15) and the gear wheel (11).

8. Electromechanically actuable parking brake according to one of the preceding claims, **characterized in that** the electromechanical actuator (15) is formed by an electric motor which has a sensor for detecting the position of its rotor.

## Revendications

1. Frein de stationnement à commande électromécanique pour véhicules automobiles, réalisé sous la forme d'un frein à tambour, comprenant un tambour de frein (5) et une serrure à écartement supportée de manière flottante, pouvant être actionnée par un actionneur électromécanique (15) avec un démultiplicateur (12, 22), laquelle serrure agit sur deux mâchoires de frein (3, 4), la serrure à écartement (2) étant formée par un agencement à broche et écrou fileté (8, 18) dont l'écrou fileté (6, 16) est entraîné par l'actionneur électromécanique (15), **caractérisé en ce que** le démultiplicateur (12, 22) ou l'agencement à broche et écrou fileté (8, 18) est réalisé de manière autobloquante afin de permettre dans l'état non parcouru par un courant une opération de serrage du frein, **en ce que** le frein à tambour présente en outre un dispositif de support (14) supporté de manière flottante qui est prévu à l'opposé de la serrure à écartement (2), et le tambour de frein (5) étant disposé dans la région centrale d'un disque de frein.

2. Frein de stationnement à commande électromécanique selon la revendication 1, **caractérisé en ce que** l'écrou fileté (6) présente une denture droite qui forme avec une roue hypoïde (1) entraînée par l'actionneur électromécanique (15) une transmission à roue hypoïde.

3. Frein de stationnement à commande électromécanique selon la revendication 1, **caractérisé en ce que** l'écrou fileté (16) présente une denture droite qui forme avec une roue dentée (11) entraînée par l'actionneur électromécanique (15) une transmission à pignons droits.

4. Frein de stationnement à commande électromécanique selon la revendication 1 ou 2, **caractérisé en ce que** l'actionneur électromécanique (15) est monté radialement par rapport au tambour de frein (5) suivant un angle adapté à l'espace de construction prévu, par rapport à un plan qui est perpendiculaire à l'axe du tambour de frein (5).

5. Frein de stationnement à commande électromécanique selon la revendication 1 ou 3, **caractérisé en ce que** l'actionneur électromécanique (15) est monté tangentiellement par rapport au tambour de frein (5) .

6. Frein de stationnement à commande électromécanique selon la revendication 2, **caractérisé en ce que** le démultiplicateur (12) est prévu entre l'actionneur électromécanique (15) et la roue hypodoïde (1).

7. Frein de stationnement à commande électromécanique selon la revendication 3, **caractérisé en ce que** le démultiplicateur (22) est prévu entre l'actionneur électromécanique (15) et la rouer dentée (11).

8. Frein de stationnement à commande électromécanique selon l'une quelconque des revendications précédentes, **caractérisé en ce que** l'actionneur électromécanique (15) est formé par un moteur électrique qui présente un capteur pour détecter la position de son rotor.
